# EUROPEAN PATENT SPECIFICATION

(11) **EP 0 587 218 B1**
(45) Date of publication and mention of the grant of the patent: **04.12.1996**
(21) Application number: 93202458.1
(22) Date of filing: 20.08.1993
(51) Int. Cl.: A01C 23/02

(54) **Device for applying manure to meadow land**
Vorrichtung zum Auftragen von Flüssigmist auf Wiesen
Dispositif pour l'épandage de lisier à la prairie

(30) Priority: 03.09.1992 NL 9201543
(43) Date of publication of application: 16.03.1994
(73) Proprietor: VREDO BEHEER B.V., NL-6669 DJ Dodewaard (NL)
(72) Inventor: De Vree, Johannes, NL-6669 DJ Dodewaard (NL)
(74) Representative: Hoijtink, Reinoud

(56) References cited:
- EP-A- 0 486 115
- DE-A- 4 122 638
- GB-A- 2 232 049

## Description

The invention relates to a device for applying liquid manure to meadow land, having a mobile frame, outflow nozzles arranged on the frame, debouching at a short distance above the ground and connected to a reservoir, drag feet arranged forwardly in the travel direction and close to the outflow nozzles and means for adjusting the height of the frame above the ground.

So-called turf layer manuring devices have been developed to limit the ammonia emission during manuring for instance of meadow land. With such a turf layer manuring device a very narrow furrow is arranged in the meadow land using usually disc-like cutting members, liquid manure is carried to the arranged furrow and the furrow is optionally then pressed closed. Examples hereof are EP-A-0 486 115 and DE-A-41 22 638.

In addition, so-called injectors have been developed, using which a furrow is made in the ground and the manure injected using a nozzle extending into the ground.

In the case of turf layer manuring devices a cut is made in the ground to a depth of about 5-6 cm. For some ground types this causes problems, since the strength of the ground does not allow the making of such cuts. It is further possible that the grass yield is reduced. In an attempt to obviate these problems and to also enable manuring on such ground types with a considerable limitation of the ammonia emission, manuring devices have been developed wherein the liquid manure is still laid on the ground in a narrow strip between the grass. The making of furrows is therefore omitted. By means of a drag foot the grass is pushed aside so that the ground surface becomes accessible for the manure, whereby smearing of the grass with the manure is prevented. The problem does however occur that old grass remnants lying on the ground hook behind the drag foot, which results in accumulation of grass. After a short time the accumulated quantity of grass remnants must therefore be removed. It is also possible that the grass remnants cause blockage of the outflow nozzles. It also occurs that the drag foot slides over the grass remnants which prevents the manure falling onto the ground surface.

The invention has for its object to obviate these problems.

This is achieved according to the invention in that, as seen in the travel direction, a knife member extending to the ground is arranged forwardly of the drag foot.

Herewith is achieved that the grass remnants are cut through without making a cut in the ground. The cut grass remnants are subsequently pushed aside by the drag foot so that the ground surface becomes accessible for the manure in operationally reliable manner. Accumulation of grass remnants and blockage of the nozzles are prevented.

The knife member can take the form of a narrow disc. The cutting knife of the disc has a breadth of for instance 2.5 mm.

The invention is further elucidated in the light of an embodiment with reference to the drawings.
Fig. 1 shows a perspective view of a part of the device according to the invention,
Fig. 2 shows a perspective view of the cutting member according to the invention,
Fig. 3A-C show respectively in side view, front view and rear view the operation of the device according to the invention, and
Fig. 4A-C show the operation of the device in changed conditions.

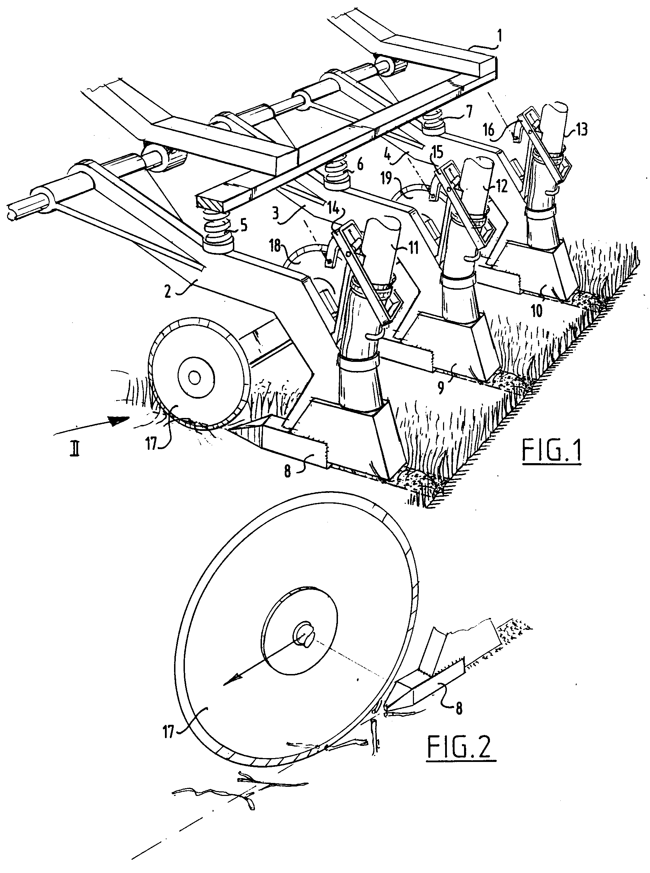

The device according to the invention comprises a frame 1 arranged on a mobile device which is pulled for instance by an agricultural vehicle (not drawn) on which is placed a reservoir for liquid manure. Connected to the frame are a number of supporting arms 2, 3, 4 which stand under a bias directed toward the ground which is provided by the respective springs 5, 6 and 7. A drag foot 8, 9 and 10 respectively is connected to each supporting arm. Connecting onto the drag feet are hoses 11, 12 and 13 respectively which are connected via distribution means (not drawn) to a reservoir for liquid manure. Via a closing mechanism 14, 15, 16 is ensured that, when the frame is lifted from the ground, the respective hoses 11, 12, 13 are closed so that no emission to the atmosphere takes place. Via outflow nozzles connected to the respective hoses 11, 12, 13 a dosed quantity of liquid manure is applied to the ground. According to the invention each drag foot 8, 9 and 10 is preceded by a disc-like cutting member 17, 18, 19 respectively. As shown in fig. 2, grass remnants lying flat on the ground are cut through by the disc. The cut grass remnants are pushed aside by the drag foot following the disc. This ensures that the liquid manure falls the ground of the meadow land in operationally reliable manner.

It is noted that during cutting of the grass remnants the knife may possibly penetrate a very limited distance into the ground. This not however a cut in the same sense as in the case of the known turf layer manuring device.

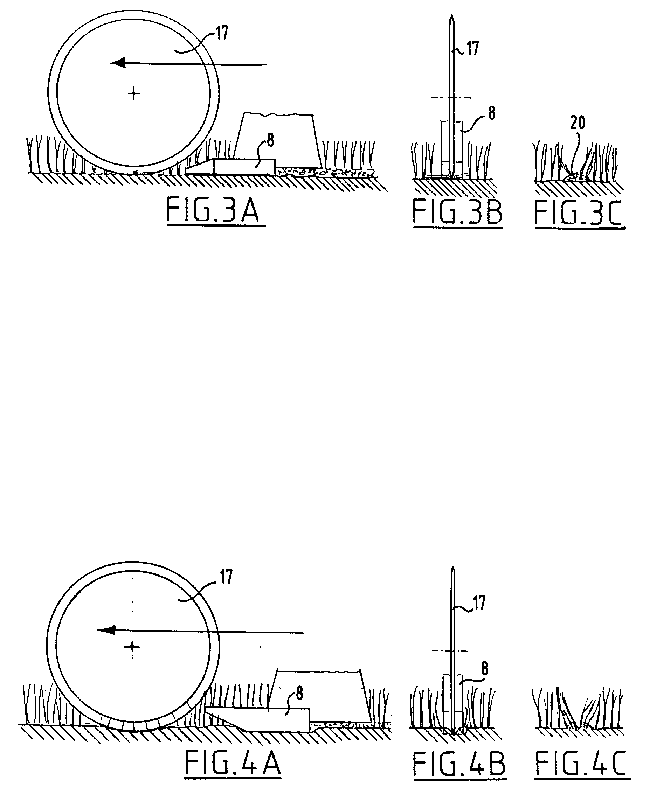

Fig. 3 shows the action of the device according to the invention. Using the disc 17 the grass is cut through such that, after the device has passed over (fig. 3C), the manure 20 lies in a narrow strip on the ground of the meadow land.

Shown in fig. 4 is the situation where the disc penetrates to a very small depth of about several millimetres into the ground, pressing it aside at that position while cutting through the grass remnants lying flat on the ground. Also in this case the manure lies in a narrow zone on the ground between the grass after the device has passed over (fig. 4C).

## Claims

1. Device for applying liquid manure to meadow land having a mobile frame (1), outflow nozzles arranged on the frame (1), debouching at a short distance above the ground and connected to a reservoir, drag feet (8, 9, 10) arranged forwardly in the travel direction and close to the outflow nozzles and means for adjusting the height of the frame (1) above the ground, **characterized in that** as seen in the travel direction a knife member (17, 18, 19) extending to the ground is arranged forwardly of the drag foot (8, 9, 10).

2. Device as claimed in claim 1, **characterized in that** the knife member (17, 18, 19) takes the form of a narrow disc (17, 18, 19).

3. Device as claimed in claims 1-2, **characterized in that** the cutting knife of the disc (17, 18, 19) has a breadth of about 2.5 mm.

## Patentansprüche

1. Vorrichtung zum Aufbringen von Flüssig-Dünger auf Wiesen- und Weideland, mit einem beweglichen Rahmen (1), mit an dem Rahmen (1) angeordneten Ausflußstutzen, die in einem kurzen Abstand über dem Boden münden und mit einem Vorratsbehälter verbunden sind, mit Schleifzinken (8, 9, 10), die in Fahrtrichtung vor und nahe bei den Auslaßstutzen angeordnet sind, und mit Vorrichtungen zur Einstellung der Höhe des Rahmens (1) über dem Boden, dadurch gekennzeichnet, daß ein sich zum Boden erstreckendes Messerelement (17, 18, 19) in Fahrtrichtung vor dem Schleifzinken (8, 9, 10) angeordnet ist.

2. Vorrichtung nach Anspruch 1, dadurch gekennzeichnet, daß das Messerelement (17, 18, 19) die Form einer schmalen Scheibe (17, 18, 19) aufweist.

3. Vorrichtung nach Anspruch 1 oder 2, dadurch gekennzeichnet, daß das Schneidmesser der Scheibe (17, 18, 19) eine Breite von ungefähr 2,5 mm aufweist.

## Revendications

1. Dispositif pour épandre du lisier sur une prairie, possédant un châssis mobile (1), des buses d'épandage placées sur le châssis (1), débouchant à une faible distance au-dessus du sol et reliées à un réservoir, des pieds formant racloirs (8, 9, 10), disposés vers l'avant dans le sens de déplacement et proches des buses d'épandage, et des moyens pour ajuster la hauteur du châssis (1) au-dessus du sol, caractérisé en ce que, comme on le voit dans le sens de déplacement, un organe formant couteau (17, 18, 19) s'étendant jusqu'au sol est placé vers l'avant du pied formant racloir (8, 9, 10).

2. Dispositif selon la revendication 1, caractérisé en ce que l'organe formant couteau (17, 18, 19) prend la forme d'un disque étroit (17, 18, 19).

3. Dispositif selon les revendications 1 et 2, caractérisé en ce que la partie coupante du disque (17, 18, 19) a une largeur d'environ 2,5 mm.
